# EUROPÄISCHE PATENTSCHRIFT

(11) **EP 3 580 923 B1**
(45) Veröffentlichungstag und Bekanntmachung des Hinweises auf die Patenterteilung: **16.09.2020**
(21) Anmeldenummer: 17835926.1
(22) Anmeldetag: 11.12.2017
(51) Int. Cl.: H04N 7/18, B60R 1/00

(54) **KAMERASYSTEM FÜR EIN FAHRZEUG**
CAMERA SYSTEM FOR A CAR
SYSTÈME DE CAMÉRA POUR UN VÉHICULE

(30) Priorität: 10.02.2017 DE 102017202155
(43) Veröffentlichungstag der Anmeldung: 18.12.2019
(73) Patentinhaber: Conti Temic Microelectronic GmbH, 90411 Nürnberg (DE)
(72) Erfinder: FECHNER, Thomas, 88142 Wasserburg (DE); BREUER, Karsten, 88179 Oberreute (DE); KRÖKEL, Dieter, 88097 Eriskirch (DE)
(86) Internationale Anmeldenummer: PCT/DE2017/200133
(87) Internationale Veröffentlichungsnummer: WO 2018/145680

(56) Entgegenhaltungen:
- US-A1- 2013 329 045
- SIMON CHRISTIAN ET AL: "Reflection removal for in-vehicle black box videos", 2015 IEEE CONFERENCE ON COMPUTER VISION AND PATTERN RECOGNITION (CVPR), IEEE, 7. Juni 2015 (2015-06-07), Seiten 4231-4239, XP032793877, DOI: 10.1109/CVPR.2015.7299051 [gefunden am 2015-10-14]
- MOHAMED ABDELAZIZ AHMED ET AL: "Reflection detection in image sequences", COMPUTER VISION AND PATTERN RECOGNITION (CVPR), 2011 IEEE CONFERENCE ON, IEEE, 20. Juni 2011 (2011-06-20), Seiten 705-712, XP032038172, DOI: 10.1109/CVPR.2011.5995670 ISBN: 978-1-4577-0394-2
- KONG NAEJIN ET AL: "A Physically-Based Approach to Reflection Separation: From Physical Modeling to Constrained Optimization", IEEE TRANSACTIONS ON PATTERN ANALYSIS AND MACHINE INTELLIGENCE, IEEE COMPUTER SOCIETY, USA, Bd. 36, Nr. 2, 1. Februar 2014 (2014-02-01), Seiten 209-221, XP011534226, ISSN: 0162-8828, DOI: 10.1109/TPAMI.2013.45 [gefunden am 2013-12-18]

## Beschreibung

Die Erfindung betrifft ein Kamerasystem für ein Fahrzeug sowie ein Verfahren zur Unterdrückung eines Spiegelbilds.

Kamerasysteme für Fahrzeuge sind bekannt. Insbesondere sind Kamerasysteme bekannt, bei denen eine Frontkamera zur Erkennung verschiedenster Objekte in einem äußeren Umfeld des Fahrzeugs zum Einsatz kommt. Die Kamera ist dabei in der Regel hinter einer Windschutzscheibe des Fahrzeugs angeordnet und blickt in Fahrtrichtung durch diese hindurch. Dabei können auf der Innenseite der Windschutzscheibe störende Spiegelungen entstehen, z.B. durch Gegenstände auf einem Armaturenbrett in einem Innenraum des Fahrzeugs.

Zur Unterdrückung dieser Spiegelungen auf der Windschutzscheibe können Polarisationsfilter eingesetzt werden. Weiterhin können Streulichtblenden oder Trichter eingesetzt werden, welche den Raum zwischen der Frontkamera und der Windschutzscheibe abschließen. Derartige Streulichtblenden können bei erweiterten Kameraöffnungswinkeln so groß werden, dass die Streulichtblenden den Fahrer des Fahrzeugs in seiner Sichtfreiheit stören. Des Weiteren können Streulichtblenden, sofern Sonnenlicht auf sie fällt, ein unerwünschtes Hintergrundsignal erzeugen, welches insgesamt das Nutzsignal anhebt und zu erkennende Strukturen verwischt. Dabei sinkt wegen der nichtlinearen Kennlinie der hochdynamischen Imager der Kontrast der zu erkennenden Strukturen überproportional ab.

C. Simon et al. zeigen in "Reflection Removal for In-Vehicle Black Box Videos", 2015 IEEE Conference on Computer Vision and Pattern Recognition (CVPR), 7. Juni 2015, S. 4231-4239, XP032793877, DOI: 10.1109/CVPR, eine Dashboard Kamera, aus deren Bildaufnahmen Reflexionen an einer Glasoberfläche ermittelt und anschließend entfernt werden können. Die Reflexionen innerhalb der Bildfolge können aus einem Layer Separationsmodell abgeleitet werden, da die Reflexionen an der Windschutzscheibe im Bild stationär sind.

Es ist die Aufgabe der vorliegenden Erfindung, ein Kamerasystem und ein Verfahren der ingangs genannten Art bereitzustellen, welche eine effektive Unterdrückung von Scheibenspiegelungen ermöglichen, wobei das Sichtfeld des Fahrers des Fahrzeugs weniger beeinträchtigt wird.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Gemäß einem ersten Aspekt der Erfindung wird ein Kamerasystem für ein Fahrzeug bereitgestellt. Bei dem Fahrzeug handelt es sich beispielsweise um ein Kraftfahrzeug, wie Auto, Bus oder Lastkraftwagen. Das Kamerasystem umfasst eine Kamera und eine Bildauswerteeinheit. Die Kamera ist dazu eingerichtet, in einem Innenraum des Fahrzeugs hinter einer Scheibe des Fahrzeugs angeordnet zu sein, sodass die Kamera durch die Scheibe eine Bildfolge mit mehreren Außenaufnahmen einer äußeren Umgebung des Fahrzeugs aufnehmen kann. Die Bildauswerteeinheit ist dazu eingerichtet, statische Bildanteile, die durch Spiegelungen in die Außenaufnahmen projiziert sind, in den Außenaufnahmen der Bildfolge zu erkennen und die erkannten statischen Bildanteile aus den Außenaufnahmen der Bildfolge zu extrahieren.

Die Erfindung macht sich zu Nutze, dass unerwünschte störende Spiegelbilder zu einem Großteil statisch sind, wohingegen das erwünschte Nutzbild während der Fahrt des Fahrzeugs eine bewegte Szene abbildet. Das Extrahieren der statischen Bildanteile kann durch Methoden der Bildverarbeitung umgesetzt werden und ermöglicht eine subtraktive Entfernung des Störbilds. Auf den Einsatz einer Streulichtblende kann unter Umständen verzichtet werden, zumindest kann eine Streulichtblende jedoch besonders klein dimensioniert werden, da durch das Extrahieren bereits besonders effektiv störende Bildanteile eliminiert worden sind.

Das Erkennen der statischen Bildanteile in den Außenaufnahmen der Bildfolge kann mit verschiedenen Methoden der Bildverarbeitung erfolgen. Im Folgenden werden in diesem Zusammenhang besonders geeignete Methoden der Bildverarbeitung beschrieben.

So kann gemäß einer Ausführungsform die Bildauswerteeinheit dazu eingerichtet sein, die statischen Bildanteile in den Außenaufnahmen der Bildfolge durch eine zeitliche Mittelwertbildung der Außenaufnahmen der Bildfolge zu erkennen. Dabei löschen sich veränderliche Bildanteile aus, während die statischen Bildanteile erhalten bleiben.

Weiterhin kann die Bildauswerteeinheit dazu eingerichtet sein, die statischen Bildanteile in den Außenaufnahmen der Bildfolge durch Bestimmen eines optischen Flusses innerhalb der Außenaufnahmen der Bildfolge zu erkennen.

Erfindungsgemäß ist die Bildauswerteeinheit dazu eingerichtet, die statischen Bildanteile in den Außenaufnahmen der Bildfolge basierend auf vorbekannten Strukturen (z.B. Spiegelungen eines innerhalb des Innenraums des Fahrzeugs angeordneten Armaturenbretts oder Spiegelungen von auf dem Armaturenbrett befindlichen Gegenständen) zu erkennen, wobei die vorbekannten Strukturen in einer Bilddatei abgelegt sind, auf welche die Kamera zugreifen kann. Beispielsweise kann die Bilddatei auf einer Speichereinheit innerhalb der Kamera abgelegt sein. Alternativ kann die Bilddatei auch auf einer externen Speichereinheit abgelegt sein, auf welche die Kamera zugreifen kann.

Das der Erfindung zu Grunde liegende, oben genannte Problem kann gemäß einem zweiten Aspekt der Erfindung alternativ durch ein Kamerasystem für ein Fahrzeug gelöst werden, wobei das Kamerasystem eine erste Kamera, eine Bildauswerteeinheit, eine zweite Kamera und eine Prozessoreinheit umfasst. Die Erste Kamera ist dazu eingerichtet, in einem Innenraum des Fahrzeugs hinter einer Scheibe des Fahrzeugs angeordnet zu sein, sodass die erste Kamera durch die Scheibe eine Bildfolge mit mehreren Außenaufnahmen einer äußeren Umgebung des Fahrzeugs aufnehmen kann. Die zweite Kamera dazu ist eingerichtet, in dem Innenraum des Fahrzeugs angeordnet zu sein, sodass die zweite Kamera eine Bildfolge mit mehreren Innenaufnahmen eines in dem Innenraum des Fahrzeugs angeordneten Armaturenbretts aufnehmen kann. Weiterhin ist die Prozessoreinheit dazu eingerichtet, die Innenaufnahmen an die Außenaufnahmen anzugleichen und die Bildauswerteeinheit ist dazu eingerichtet, Bildanteile in den Außenaufnahmen, welche durch Spiegelung des Armaturenbretts oder von auf dem Armaturenbrett befindlichen Gegenständen an der Scheibe entstehen, aus den Außenaufnahmen zu extrahieren. Dabei können die Bildauswerteeinheit und die Prozessoreinheit auch zusammenfallen, d.h. es kann sich um eine einzige Einheit handeln, welche die genannten Funktionen ausführen kann.

Gemäß einem dritten Aspekt der Erfindung wird ein Verfahren zur Unterdrückung eines Spiegelbilds bereitgestellt, wobei eine Kamera in einem Innenraum eines Fahrzeugs hinter einer Scheibe des Fahrzeugs angeordnet ist und durch die Scheibe eine Bildfolge mit mehreren Außenaufnahmen einer äußeren Umgebung des Fahrzeugs aufnimmt. Das Verfahren umfasst ein Erkennen statischer Bildanteile in den Außenaufnahmen der Bildfolge mittels einer Bildauswerteeinheit der Kamera, wobei die statischen Bildanteile durch Spiegelungen in die Außenaufnahmen projiziert sind, und ein Extrahieren der erkannten statischen Bildanteile aus den Außenaufnahmen der Bildfolge mittels der Bildauswerteeinheit.

Gemäß einer Ausführungsform erfolgt das Erkennen der statischen Bildanteile in den Außenaufnahmen der Bildfolge durch zeitliches Mittelwertbilden der Außenaufnahmen der Bildfolge mittels der Bildauswerteeinheit.

Weiterhin kann das Erkennen der statischen Bildanteile in den Außenaufnahmen der Bildfolge durch Bestimmen eines optischen Flusses innerhalb der Außenaufnahmen der Bildfolge mittels der Bildauswerteeinheit erfolgen.

Erfindungsgemäß erfolgt das Erkennen der statischen Bildanteile in den Außenaufnahmen der Bildfolge basierend auf vorbekannten Strukturen mittels der Bildauswerteeinheit, wobei die vorbekannten Strukturen in einer Bilddatei abgelegt sind, auf welche die Kamera zugreifen kann. Insbesondere können die vorbekannten Strukturen durch maschinelle Lernverfahren ermittelt werden.

Gemäß einem vierten Aspekt der Erfindung wird ein alternatives Verfahren zur Unterdrückung eines Spiegelbilds bereitgestellt. Dabei nimmt eine erste Kamera, welche in einem Innenraum eines Fahrzeugs hinter einer Scheibe des Fahrzeugs angeordnet ist, durch die Scheibe eine Bildfolge mit mehreren Außenaufnahmen einer äußeren Umgebung des Fahrzeugs auf. Weiterhin nimmt eine zweite Kamera, welche in dem Innenraum des Fahrzeugs angeordnet ist, eine Bildfolge mit mehreren Innenaufnahmen eines in dem Innenraum des Fahrzeugs angeordneten Armaturenbretts auf. Das Verfahren umfasst ein Angleichen der Innenaufnahmen an die Außenaufnahmen mittels einer Prozessoreinheit und ein Extrahieren von Bildanteilen in den Außenaufnahmen, welche durch Spiegelung des Armaturenbretts oder von auf dem Armaturenbrett befindlichen Gegenständen an der Scheibe entstehen, aus den Außenaufnahmen mittels einer Bildauswerteeinheit.

Im Folgenden werden Ausführungsbeispiele der Erfindung anhand der schematischen Zeichnung näher erläutert. Hierbei zeigt
- Fig. 1: eine Seitenansicht eines Fahrzeugs mit einem Ausführungsbeispiel eines erfindungsgemäßen Kamerasystems,
- Fig. 2: eine detailliertere Seitenansicht des Kamerasystems nach Fig. 1,
- Fig. 3: eine Seitenansicht eines weiteren Ausführungsbeispiels eines erfindungsgemäßen Kamerasystems für das Fahrzeug nach Fig. 1,
- Fig. 4: eine Aufnahme einer Bildfolge, welche durch eine Kamera des Kamerasystems nach Fig. 1 gemacht worden ist,
- Fig. 5: die Aufnahme nach Fig. 4, wobei lediglich statische Bildanteile der Aufnahme nach Fig. 4 dargestellt sind,
- Fig. 6: die Aufnahme nach Fig. 4, wobei lediglich bewegte Bildanteile der Aufnahme nach Fig. 4 dargestellt sind,
- Fig. 7: ein Verfahrensschema, welches ein Ausführungsbeispiel eines erfindungsgemäßen Verfahrens zur Unterdrückung eines Spiegelbilds veranschaulicht, und
- Fig. 8: ein weiteres Verfahrensschema, welches ein weiteres Ausführungsbeispiel eines erfindungsgemäßen Verfahrens zur Unterdrückung eines Spiegelbilds veranschaulicht.

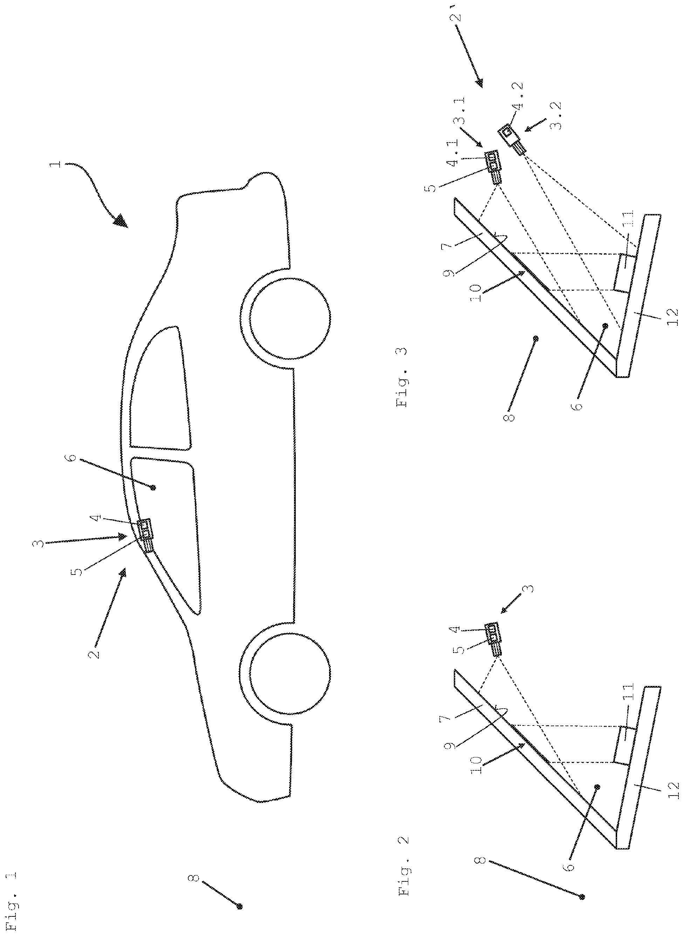

Fig. 1 zeigt ein Fahrzeug 1, in dem gezeigten Ausführungsbeispiel ein Automobil. Das Fahrzeug 1 umfasst ein Kamerasystem 2, welches wiederum eine Kamera 3 und eine Bildauswerteeinheit 4 aufweist. Außerdem kann das Kamerasystem 2, wie durch Fig. 1 gezeigt, eine Prozessoreinheit 5 umfassen. Die Bildauswerteeinheit 4 und die Prozessoreinheit 5 können auch in einer gemeinsamen Einheit zusammengefasst sein.

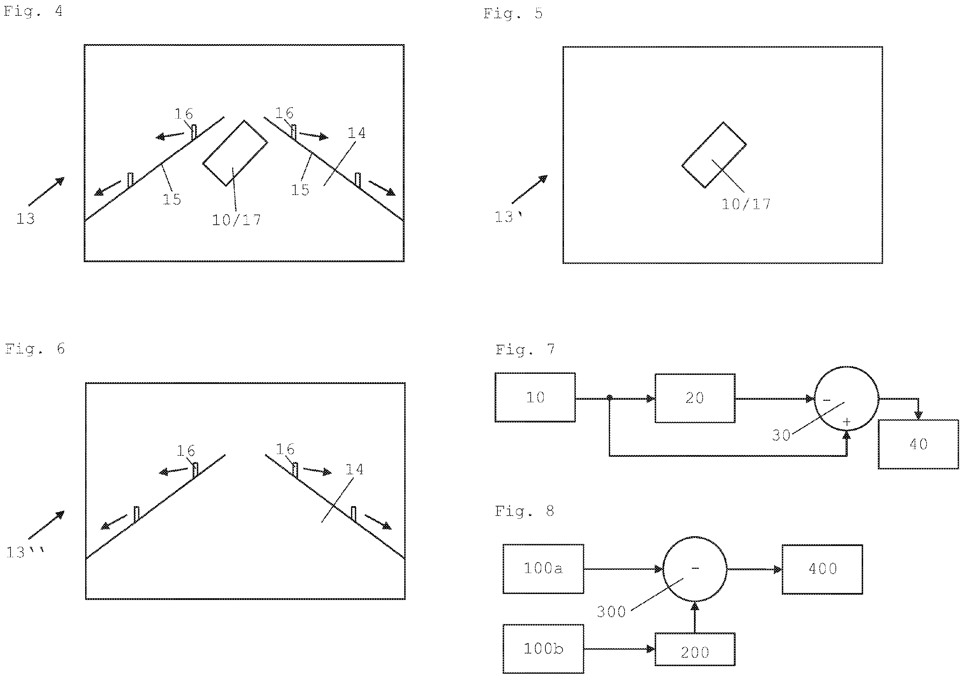

Wie insbesondere aus Fig. 2 ersichtlich, kann die Kamera 3 in einem Innenraum 6 des Fahrzeugs 1 angeordnet sein, und zwar insbesondere in einem Bereich hinter einer Windschutzscheibe 7 des Fahrzeugs 1. Mittels der Kamera 3 kann in einem Verfahrensschritt 10 (vgl. Fig. 7) durch die Windschutzscheibe 7 eine Bildfolge von einer äußeren Umgebung 8 des Fahrzeugs 1 aufgenommen werden, wobei die Bildfolge mehrere Außenaufnahmen (Fig. 4) umfasst, und wobei die Außenaufnahmen zeitlich aufeinanderfolgend gemacht werden. Ein möglicher Erfassungsbereich der Kamera 3 ist in Fig. 2 durch gestrichelte Linien verdeutlicht.

Während die Außenaufnahmen mittels der Kamera 3 gemacht werden, kann es vorkommen, dass auf einer Innenseite 9 der Windschutzscheibe 7 ein störendes und daher unerwünschtes Spiegelbild 10 entsteht. In dem gezeigten Ausführungsbeispiel entsteht das Spiegelbild 10 durch eine Reflektion eines Gegenstands 11 auf der Innenseite 9 der Windschutzscheibe 7, wobei sich der Gegenstand 11 auf einem Armaturenbrett 12 befindet, welches in dem Innenraum 6 des Fahrzeugs 1 angeordnet ist. Bei dem Gegenstand 11 kann es sich beispielsweise um eine (insbesondere helle) Zeitschrift, einen Behälter oder Ähnliches handeln. Weiterhin kann das Spiegelbild 10 auch durch eine Reflektion des Armaturenbretts 12 auf der Innenseite 9 der Windschutzscheibe 7 allein entstehen, ohne dass sich auf dem Armaturenbrett 12 ein Gegenstand 11 befinden muss.

Das störende Spiegelbild 10 ist in den Außenaufnahmen statisch, wohingegen ein Nutzbild während der Fahrt des Fahrzeugs 1 eine bewegte Szene abbildet. Unter dem "Nutzbild" kann dabei ein Bildbereich der Außenaufnahme 13 verstanden werden, wobei dieser Bildbereich nicht das störende Spiegelbild 10 beinhaltet. Bezugnehmend auf Fig. 4 zeigt die Außenaufnahme 13 das Spiegelbild 10, welches aufgrund einer Reflektion des Gegenstands 11 auf der Innenseite 9 der Windschutzscheibe 7 entsteht (Fig. 2).

Das Spiegelbild 10 ist in der durch Fig. 4 gezeigten Außenaufnahme 13 und auch in anderen (nicht gezeigten) Außenaufnahmen der Bildfolge statisch. Weiterhin zeigt die durch Fig. 4 dargestellte Außenaufnahme 13 eine Straße 14, auf welcher sich das Fahrzeug 1 vorwärts bewegt, wobei mittels der Kamera 3 ein Vorausbereich des Fahrzeugs 1 in den einzelnen Außenaufnahmen 13 aufgenommen wird. An seitlichen Rändern 15 der Straße 14 befinden sich Leitpfosten 16, welche sich bei einer Vorausbewegung des Fahrzeugs 1 auf das Fahrzeug 1 zu bewegen, was in Fig. 4 durch Hilfspfeile verdeutlicht ist, welche sich jedoch nicht in den Außenaufnahmen 13 befinden.

Mittels der Bildauswerteeinheit 4 der Kamera 3 kann in einem Verfahrensschritt 20 das störende Spiegelbild 10 als ein statisches Objekt innerhalb der Außenaufnahmen 13 erkannt werden. Entsprechende Bildanteile 17 in den Außenaufnahmen 13 erkennt die Bildauswerteeinheit 4 dabei als statische Bildanteile 17. Das Erkennen der statischen Bildanteile 17 in den Außenaufnahmen 13 kann dabei beispielsweise durch zeitliche Mittelwertbildung erfolgen, durch Bestimmen eines optischen Flusses innerhalb der Außenaufnahmen 13 und/oder basierend auf vorbekannten Strukturen (z.B. das Armaturenbrett 12 oder der Gegenstand 11), welche in einer Bilddatei abgelegt sind, auf welche die Bildauswerteeinheit 4 der Kamera 3 zugreifen kann. Mittels der Bildauswerteeinheit 4 können die erkannten statischen Bildanteile 17 in den Außenaufnahmen 13 in einem nachfolgenden Verfahrensschritt 30 subtraktiv entfernt werden (vgl. Fig. 7 und die erste modifizierte Außenaufnahme 13' in Fig. 5), was durch die Bildauswerteeinheit 4 mittels Methoden der Bildverarbeitung erfolgen kann. Durch die subtraktive Entfernung entsteht eine zweite modifizierte Außenaufnahme 13" (Fig. 6), welche beispielsweise in einem weiteren Verfahrensschritt 40 auf einem Anzeigegerät (nicht gezeigt) innerhalb des Innenraums 6 des Fahrzeugs 1 angezeigt werden kann. Die zweite modifizierte Außenaufnahme 13" enthält das störende Spiegelbild 10 nicht mehr.

Fig. 3 zeigt eine alternative Konfiguration eines Ausführungsbeispiels eines erfindungsgemäßen Kamerasystems 2', welches beispielsweise in dem Fahrzeug 1 nach Fig. 1 zum Einsatz kommen kann. Das Kamerasystem 2' nach Fig. 3 umfasst eine erste Kamera 3.1 mit einer ersten Bildauswerteeinheit 4.1, eine zweite Kamera 3.2 und eine Prozessoreinheit 5. Die zweite Kamera 3.2 kann eine zweite Bildauswerteeinheit 4.2 umfassen. In dem gezeigten Ausführungsbeispiel ist die Prozessoreinheit 5 in der ersten Kamera 3.1 angeordnet. Alternativ kann die Prozessoreinheit 5 jedoch auch außerhalb der ersten Kamera 3.1, z.B. innerhalb der zweiten Kamera 3.2 angeordnet sein.

Die erste Kamera 3.1 kann in dem Innenraum 6 des Fahrzeugs 1 angeordnet sein, und zwar insbesondere in dem Bereich hinter der Windschutzscheibe 7 des Fahrzeugs 1. Mittels der ersten Kamera 3.1 kann in einem Verfahrensschritt 100a (vgl. Fig. 8) durch die Windschutzscheibe 7 eine Bildfolge von einer äußeren Umgebung 8 des Fahrzeugs 1 aufgenommen werden, wobei die Bildfolge mehrere Außenaufnahmen (Fig. 4) umfasst, und wobei die Außenaufnahmen zeitlich aufeinanderfolgend gemacht werden. Ein möglicher Erfassungsbereich der ersten Kamera 3.1 ist in Fig. 3 mit gestrichelten Linien verdeutlicht. Wie im Zusammenhang mit dem Ausführungsbeispiel nach Fig. 2 beschrieben, kann während die Außenaufnahmen 13 gemacht werden, ein störende Spiegelbild 10 auf der Innenseite 9 der Windscheibe 7 entstehen.

Um das störende Spiegelbild 10 aus den Außenaufnahmen 13 zu entfernen, kann in einem Verfahrensschritt 100b mittels der zweiten Kamera 3.2 eine Bildfolge mit mehreren Innenaufnahmen (nicht gezeigt) aufgenommen werden, wobei die Innenaufnahmen eine Abbildung des in dem Innenraum 6 des Fahrzeugs 1 angeordneten Armaturenbretts 12 beinhalten. Sofern sich ein Gegenstand 11 auf dem Armaturenbrett 12 befindet, wird dieser ebenfalls von der zweiten Kamera 3.2 erfasst. Die zweite Kamera 3.2 ist innerhalb des Innenraums 6 des Fahrzeugs 1 entsprechend angeordnet, um das Armaturenbrett 12 bzw. einen auf dem Armaturenbrett 12 befindlichen Gegenstand 11 zu erfassen. Ein möglicher Erfassungsbereich der zweiten Kamera ist in Fig. 3 durch gestrichelte Linien verdeutlicht. Die Verfahrensschritte 100a und 100b können insbesondere zeitgleich durchgeführt werden.

Mittels der Prozessoreinheit 5 können in einem weiteren Verfahrensschritt 200 mittels der Prozessoreinheit 5 die Innenaufnahmen der zweiten Kamera 3.2 an die Außenaufnahmen der ersten Kamera 3.1 angeglichen werden. Mittels der ersten Bildauswerteeinheit 4.1 der ersten Kamera 3.1 und/oder mittels der zweiten Bildauswerteeinheit 4.2 der zweiten Kamera 3.2 können in einem weiteren Verfahrensschritt 300 Bildanteile aus den Außenaufnahmen 13 extrahiert werden, sodass eine modifizierte Außenaufnahmen 13" - wie durch Fig. 6 gezeigt - entsteht. Dabei können insbesondere diejenigen Bildanteile extrahiert werden, welche durch eine Spiegelung des Armaturenbretts 12 entstehen, oder welche durch Gegenstände 11 entstehen, welche sich auf dem Armaturenbrett befinden (vgl. die modifizierte Außenaufnahmen 13' in Fig. 5). Weiterhin kann die modifizierte Außenaufnahmen 13" nach Fig. 6 in einem weiteren Verfahrensschritt 400 auf einem Anzeigegerät (nicht gezeigt) innerhalb des Innenraums 6 des Fahrzeugs 1 angezeigt werden.

## Patentansprüche

1. Kamerasystem (2) für ein Fahrzeug (1), das Kamerasystem (2) umfassend eine Kamera (3) und eine Bildauswerteeinheit (4), wobei
- die Kamera (3) dazu eingerichtet ist, in einem Innenraum (6) des Fahrzeugs (1) hinter einer Scheibe (7) des Fahrzeugs (1) angeordnet zu sein, sodass die Kamera (3) durch die Scheibe (7) eine Bildfolge mit mehreren Außenaufnahmen (13) einer äußeren Umgebung (8) des Fahrzeugs (1) aufnehmen kann, und
- die Bildauswerteeinheit (4) dazu eingerichtet ist, statische Bildanteile, die durch Spiegelungen in die Außenaufnahmen (13) projiziert sind, (17) in den Außenaufnahmen (13) der Bildfolge basierend auf vorbekannten Strukturen (11, 12) zu erkennen, wobei die vorbekannten Strukturen (11, 12) in einer Bilddatei abgelegt sind, auf welche die Kamera (3) zugreifen kann, und die erkannten statischen Bildanteile (17) aus den Außenaufnahmen (13) der Bildfolge zu extrahieren.

2. Kamerasystem (2) nach Anspruch 1, wobei die Bildauswerteeinheit (4) dazu eingerichtet ist, die statischen Bildanteile (17) in den Außenaufnahmen (13) der Bildfolge durch eine zeitliche Mittelwertbildung der Außenaufnahmen (13) der Bildfolge zu erkennen.

3. Kamerasystem (2) nach Anspruch 1 oder 2, wobei die Bildauswerteeinheit (4) dazu eingerichtet ist, die statischen Bildanteile (17) in den Außenaufnahmen (13) der Bildfolge durch Bestimmen eines optischen Flusses innerhalb der Außenaufnahmen (13) der Bildfolge zu erkennen.

4. Kamerasystem (2') für ein Fahrzeug (1), das Kamerasystem (2') umfassend eine erste Kamera (3.1), eine Bildauswerteeinheit (4.1), eine zweite Kamera (3.2) und eine Prozessoreinheit (5), wobei
- die erste Kamera (3.1) dazu eingerichtet ist, in einem Innenraum (6) des Fahrzeugs (1) hinter einer Scheibe (7) des Fahrzeugs (1) angeordnet zu sein, sodass die erste Kamera (3.1) durch die Scheibe (7) eine Bildfolge mit mehreren Außenaufnahmen (13) einer äußeren Umgebung (8) des Fahrzeugs (1) aufnehmen kann,
- die zweite Kamera (3.2) dazu eingerichtet ist, in dem Innenraum (6) des Fahrzeugs (1) angeordnet zu sein, sodass die zweite Kamera (3.2) eine Bildfolge mit mehreren Innenaufnahmen eines in dem Innenraum (7) des Fahrzeugs (1) angeordneten Armaturenbretts (12) aufnehmen kann, und
- die Prozessoreinheit (5) dazu eingerichtet ist, die Innenaufnahmen an die Außenaufnahmen (13) anzugleichen und
- die Bildauswerteeinheit (4.1, 4.2) dazu eingerichtet ist, Bildanteile in den Außenaufnahmen (13), welche durch Spiegelung des Armaturenbretts (12) oder von auf dem Armaturenbrett (12) befindlichen Gegenständen (11) an der Scheibe (7) entstehen, aus den Außenaufnahmen (13) zu extrahieren.

5. Verfahren zur Unterdrückung eines Spiegelbilds (10), wobei eine Kamera (3) in einem Innenraum (6) eines Fahrzeugs (1) hinter einer Scheibe (7) des Fahrzeugs (1) angeordnet ist und durch die Scheibe (7) eine Bildfolge mit mehreren Außenaufnahmen (13) einer äußeren Umgebung (8) des Fahrzeugs (1) aufnimmt,
das Verfahren umfassend:
- Erkennen statischer Bildanteile (17) in den Außenaufnahmen (13) der Bildfolge basierend auf vorbekannten Strukturen (11, 12) mittels einer Bildauswerteeinheit (4) der Kamera (3), wobei die statischen Bildanteile (17) durch Spiegelungen in die Außenaufnahmen (13) projiziert sind, und wobei die vorbekannten Strukturen (11, 12) in einer Bilddatei abgelegt sind, auf welche die Kamera (3) zugreifen kann und
- Extrahieren der erkannten statischen Bildanteile (17) aus den Außenaufnahmen (13) der Bildfolge mittels der Bildauswerteeinheit (4).

6. Verfahren nach Anspruch 5, wobei das Erkennen der statischen Bildanteile (17) in den Außenaufnahmen (13) der Bildfolge durch zeitliches Mittelwertbilden der Außenaufnahmen der Bildfolge mittels der Bildauswerteeinheit (4) erfolgt.

7. Verfahren nach Anspruch 5 oder 6, wobei das Erkennen der statischen Bildanteile (17) in den Außenaufnahmen (13) der Bildfolge durch Bestimmen eines optischen Flusses innerhalb der Außenaufnahmen (13) der Bildfolge mittels der Bildauswerteeinheit (4) erfolgt.

8. Verfahren nach einem der Ansprüche 5 bis 7, wobei die vorbekannten Strukturen (11, 12) durch maschinelle Lernverfahren ermittelt werden.

9. Verfahren zur Unterdrückung eines Spiegelbilds (10), wobei
- eine erste Kamera (3.1) in einem Innenraum (6) eines Fahrzeugs (1) hinter einer Scheibe (7) des Fahrzeugs (1) angeordnet ist und durch die Scheibe (7) eine Bildfolge mit mehreren Außenaufnahmen (13) einer äußeren Umgebung (8) des Fahrzeugs (1) aufnimmt, und
- eine zweite Kamera (3.2) in dem Innenraum (6) des Fahrzeugs (1) angeordnet ist und eine Bildfolge mit mehreren Innenaufnahmen eines in dem Innenraum (6) des Fahrzeugs (1) angeordneten Armaturenbretts (12) aufnimmt,
das Verfahren umfassend:
- Angleichen der Innenaufnahmen an die Außenaufnahmen (13) mittels einer Prozessoreinheit (5) und
- Extrahieren von Bildanteilen (17) in den Außenaufnahmen, welche durch Spiegelung des Armaturenbretts (12) oder von auf dem Armaturenbrett (12) befindlichen Gegenständen (11) an der Scheibe (7) entstehen, aus den Außenaufnahmen (13) mittels einer Bildauswerteeinheit (4.1, 4.2).

## Claims

1. A camera system (2) for a vehicle (1), the camera system (2) comprising a camera (3) and an image evaluation unit (4), wherein
- the camera (3) is adapted to be arranged in an interior (6) of the vehicle (1) behind a windowpane (7) of the vehicle (1) so that the camera (3) can record an image sequence with multiple external recordings (13) of external surroundings (8) of the vehicle (1) through the windowpane (7), and
- the image evaluation unit (4) is adapted to detect static image components, which are projected into the external recordings (13) by reflections, in the external recordings (13) of the image sequence based on previously known structures (11, 12), wherein the previously known structures (11, 12) are stored in an image file which can be accessed by the camera (3), and to extract the detected static image components (17) from the external recordings (13) of the image sequence.

2. The camera system (2) according to Claim 1, wherein the image evaluation unit (4) is adapted to detect the static image components (17) in the external recordings (13) of the image sequence by a time averaging of the external recordings (13) of the image sequence.

3. The camera system (2) according to Claim 1 or 2, wherein the image evaluation unit (4) is adapted to detect the static image components (17) in the external recordings (13) of the image sequence by determining an optical flow within the external recordings (13) of the image sequence.

4. A camera system (2') for a vehicle (1), the camera system (2') comprising a first camera (3.1), an image evaluation unit (4.1), a second camera (3.2) and a processor unit (5), wherein
- the first camera (3.1) is adapted to be arranged in an interior (6) of the vehicle (1) behind a windowpane (7) of the vehicle (1) so that the first camera (3.1) can record an image sequence with multiple external recordings (13) of external surroundings (8) of the vehicle (1) through the windowpane (7),
- the second camera (3.2) is adapted to be arranged in the interior (6) of the vehicle (1) so that the second camera (3.2) can record an image sequence with multiple internal recordings of a dashboard (12) arranged in the interior (6) of the vehicle (1), and
- the processor unit (5) is adapted to match the internal recordings to the external recordings (13), and
- the image evaluation unit (4.1, 4.2) is adapted to extract from the external recordings (13) image components in the external recordings (13) which occur on the windowpane (7) by reflection of the dashboard (12) or of objects (11) located on the dashboard (12).

5. A method for suppressing a mirror image (10), wherein a camera (3) is arranged in an interior (6) of a vehicle (1) behind a windowpane (7) of the vehicle (1) and records an image sequence with multiple external recordings (13) of external surroundings (8) of the vehicle (1) through the windowpane (7), the method comprising:
- detection of static image components (17) in the external recordings (13) of the image sequence based on previously known structures (11, 12) by means of an image evaluation unit (4) of the camera (3), wherein the static image components (17) are projected into the external recordings (13) by reflections, and wherein the previously known structures (11, 12) are stored in an image file which can be accessed by the camera (3), and
- extraction of the detected static image components (17) from the external recordings (13) of the image sequence by means of the image evaluation unit (4).

6. The method according to Claim 5, wherein the detection of the static image components (17) in the external recordings (13) of the image sequence is carried out by means of time averaging of the external recordings of the image sequence by means of the image evaluation unit (4).

7. The method according to Claim 5 or 6, wherein the detection of the static image components (17) in the external recordings (13) of the image sequence is carried out by determining an optical flow within the external recordings (13) of the image sequence by means of the image evaluation unit (4).

8. The method according to any one of Claims 5 to 7, wherein the previously known structures (11, 12) are determined by machine learning processes.

9. A method for suppressing a mirror image (10), wherein
- a first camera (3.1) is arranged in an interior (6) of a vehicle (1) behind a windowpane (7) of the vehicle (1) and records an image sequence with multiple external recordings (13) of the external surroundings (8) of the vehicle (1) through the windowpane (7), and
- a second camera (3.2) is arranged in the interior (6) of the vehicle (1) and records an image sequence with multiple internal recordings of a dashboard (12) arranged in the interior (6) of the vehicle (1),
the method comprising:
- matching the internal recordings to the external recordings (13) by means of a processor unit (5), and
- extracting image components (17) in the external recordings, which occur on the windowpane (7) by reflection of the dashboard (12) or of objects (11) located on the dashboard (12), from the external recordings (13) by means of an image evaluation unit (4.1, 4.2).

## Revendications

1. Système de caméra (2) pour un véhicule (1), le système de caméra (2) comprenant une caméra (3) et une unité d'analyse d'images (4),
- la caméra (3) étant conçue pour être disposée dans un habitacle (6) du véhicule (1) derrière une vitre (7) du véhicule (1), de telle sorte que la caméra (3) peut prendre, par la vitre (7), une séquence d'images avec plusieurs prises de vue extérieures (13) d'un environnement extérieur (8) du véhicule (1), et
- l'unité d'analyse d'images (4) étant conçue pour identifier des parties d'image statiques (17) qui sont projetées par des réflexions dans les prises de vue extérieures (13), dans les prises de vue extérieures (13) de la séquence d'images basé sur des structures déjà connues (11, 12), les structures déjà connues (11, 12) étant enregistrées dans un fichier image auquel la caméra (3) peut accéder, et pour extraire les parties d'image (17) statiques identifiées hors des prises de vue extérieures (13) de la séquence d'images.

2. Système de caméra (2) selon la revendication 1, l'unité d'analyse d'images (4) étant conçue pour identifier les parties d'image statiques (17) dans les prises de vue extérieures (13) de la séquence d'images par une formation de moyenne temporelle des prises de vue extérieures (13) de la séquence d'images.

3. Système de caméra (2) selon la revendication 1 ou 2, l'unité d'analyse d'images (4) étant conçue pour identifier les parties d'image statiques (17) dans les prises de vue extérieures (13) de la séquence d'images par la détermination d'un flux optique dans les prises de vue extérieures (13) de la séquence d'images.

4. Système de caméra (2') pour un véhicule (1), le système de caméra (2') comprenant une première caméra (3.1), une unité d'analyse d'images (4.1), une deuxième caméra (3.2) et une unité de traitement (5),
- la première caméra (3.1) étant conçue pour être disposée dans un habitacle (6) du véhicule (1) derrière une vitre (7) du véhicule (1), de telle sorte que la première caméra (3.1) peut prendre, par la vitre (7), une séquence d'images avec plusieurs prises de vue extérieures (13) d'un environnement extérieur (8) du véhicule (1),
- la deuxième caméra (3.2) étant conçue pour être disposée dans l'habitacle (6) du véhicule (1), de telle sorte que la deuxième caméra (3.2) peut prendre une séquence d'images avec plusieurs prises de vue intérieures d'un tableau de bord (12) disposé dans l'habitacle (6) du véhicule (1), et
- l'unité de traitement (5) étant conçue pour aligner les prises de vue intérieures sur les prises de vue extérieures (13) et
- l'unité d'analyse d'images (4.1, 4.2) étant conçue pour extraire des parties d'images hors des prises de vue extérieures (13) dans les prises de vue extérieures (13), lesquelles sont produites par réflexion, sur la vitre (7), du tableau de bord (12) ou d'objets se trouvant sur le tableau de bord (12).

5. Procédé pour la suppression d'un reflet (10), une caméra (3) étant disposée dans un habitacle (6) d'un véhicule (1) derrière une vitre (7) du véhicule (1) et enregistrant une séquence d'images avec plusieurs prises de vue extérieures (13) d'un environnement extérieur (8) du véhicule (1) à travers la vitre (7),
le procédé comprenant :
- l'identification de parties d'image statiques (17) dans les prises de vue extérieures (13) de la séquence d'images basé sur des structures déjà connues (11, 12) au moyen d'une unité d'analyse d'images (4) de la caméra (3), les parties d'image statiques (17) étant projetées par des réflexions dans les prises de vue extérieures (13), et les structures déjà connues (11, 12) étant enregistrées dans un fichier image auquel la caméra (3) peut accéder et
- l'extraction des parties d'image statiques identifiées (17) hors des prises de vue extérieures (13) de la séquence d'images au moyen d'une unité d'analyse d'images (4).

6. Procédé selon la revendication 5, l'identification des parties d'image statiques (17) dans les prises de vue extérieures (13) de la séquence d'images étant effectuée par la formation de moyenne temporelle des prises de vue extérieures de la séquence d'images au moyen de l'unité d'analyse d'images (4).

7. Procédé selon la revendication 5 ou 6, l'identification des parties d'image statiques (17) dans les prises de vue extérieures (13) de la séquence d'images étant effectuée par la détermination d'un flux optique dans les prises de vue extérieures (13) de la séquence d'images au moyen d'une unité d'analyse d'images (4).

8. Procédé selon l'une des revendications 5 à 7, les structures déjà connues (11, 12) étant déterminées par des procédés d'apprentissage par machine.

9. Procédé pour la suppression d'un reflet (10),
- une première caméra (3.1) étant disposée dans un habitacle (6) du véhicule (1) derrière une vitre (7) du véhicule (1) et prenant, par la vitre (7), une séquence d'images avec plusieurs prises de vue extérieures (13) d'un environnement extérieur (8) du véhicule (1), et
- une deuxième caméra (3.2) étant disposée dans l'habitacle (6) du véhicule (1) et prenant une séquence d'images avec plusieurs prises de vue intérieures d'un tableau de bord (12) disposé dans l'habitacle (6) du véhicule (1),
le procédé comprenant :
- l'alignement des prises de vue intérieures sur les prises de vue extérieures (13) au moyen d'une unité de traitement (5) et
- l'extraction hors des prises de vue extérieures (13), au moyen d'une unité d'analyse d'images (4.1, 4.2), de parties d'images (17) dans les prises de vue extérieures, lesquelles sont produites sur la vitre (7) par réflexion du tableau de bord (12) ou par des objets (11) se trouvant sur le tableau de bord (12).
